Europäisches Patentamt

European Patent Office

Office européen des brevets

(11) Numéro de publication : **0 107 585**
**B1**

(12) **FASCICULE DE BREVET EUROPÉEN**

(45) Date de publication du fascicule du brevet :
21.01.87

(51) Int. Cl.⁴ : **B 65 G   1/04**, B 65 G   1/06

(21) Numéro de dépôt : 83402014.1

(22) Date de dépôt : 17.10.83

(54) **Procédé et installation pour le stockage d'objets à manutention automatisée.**

(30) Priorité : 28.10.82 FR 8218108

(43) Date de publication de la demande :
02.05.84 Bulletin 84/18

(45) Mention de la délivrance du brevet :
21.01.87 Bulletin 87/04

(84) Etats contractants désignés :
**AT BE CH DE GB IT LI LU NL SE**

(56) Documents cités :
**DE-A- 2 950 111**
**FR-A- 2 002 275**
**FR-A- 2 216 192**
**FR-A- 2 279 643**
**US-A- 2 711 812**
**US-A- 3 759 403**

(73) Titulaire : **SOCIETE CONTINENTALE DU CARTON
ONDULE SOCAR Société Anonyme dite:
5,7 rue de la République
F-94160 Saint Mande (FR)**

(72) Inventeur : **Marques, Michel
17 Avenue des Roses
F-95230 Soisy-Sous-Montmorency (FR)**

(74) Mandataire : **Jolly, Jean-Pierre et al
Cabinet BROT et JOLLY 83, rue d'Amsterdam
F-75008 Paris (FR)**

Jouve, 18, rue St-Denis, 75001 Paris, France

## Description

La présente invention a trait au stockage d'objets quelconques et plus particulièrement au stockage de piles de plaques, par exemple en carton ondulé dans une usine de fabrication d'emballages.

On se référera dans ce qui suit, uniquement pour raison de commodité, à cette dernière application, mais on ne perdra pas de vue que l'invention s'applique à toutes sortes de domaines où il est nécessaire de stocker des objets quelconques en vue de leur utilisation ou traitement ultérieur.

Dans une usine de fabrication d'emballages en carton ondulé, on doit disposer de très grandes surfaces pour le stockage des piles de plaques de carton. Ces surfaces, qui sont généralement situées entre l'onduleuse et les machines de transformation des flans, peuvent être mécanisées afin que toutes les manipulations sur les charges soient effectuées automatiquement sans intervention humaine.

Dans sa conception actuelle la plus évoluée, l'aire de stockage est constituée par une pluralité de voies parallèles et juxtaposées, formées de rouleaux adjacents, d'axes perpendiculaires à la direction des voies. Ces rouleaux sont soit tous motorisés, soit montés libres et associés à des chenilles d'entraînement disposées latéralement le long des voies.

La souplesse d'exploitation d'une usine exige des surfaces de stockage très importantes. Dans les systèmes actuels décrits ci-dessus le coût de l'aire de stockage est directement proportionnel à cette surface. Les investissements nécessaires pour réaliser une aire de stockage importante sont donc très élevés. Par ailleurs, bien qu'ils soient tous motorisés, les rouleaux ne sont en service que pendant une très faible fraction de temps, correspondant aux temps d'amenée de la pile jusqu'à l'emplacement choisi sur l'aire et au temps de transfert depuis ledit emplacement jusqu'aux appareils de manutention. L'expérience a montré que pendant 95 % du temps, la fonction des rouleaux et la fonction motrice du dispositif de motorisation sont inutilisées, puisque les piles de plaques de carton sont au repos.

Par ailleurs, le coefficient de remplissage latéral de ladite aire de stockage est fonction de la dimension des plaques et n'est que très rarement maximum, étant donné que la largeur des allées de rouleaux et le pas entre chenilles d'entraînement sont choisis, en principe, au moins égaux à l'ouverture maximale des machines alimentées. Lorsque les piles ont une largeur plus faible, il en résulte une perte de place.

Par le brevet US-A-2 711 812, on connaît une installation pour le stockage d'objets qui remédie en partie à cet inconvénient. Cette installation comprend une pluralité de poutres horizontales et parallèles espacées d'un pas constant et reposant sur des supports, de manière à définir entre elles des voies de passage parallèles aux poutres, et une pluralité de véhicules de manutention mécanisés pouvant se déplacer chacun le long de l'une des voies, et qui peuvent être réglés en hauteur entre une position basse pour laquelle ils peuvent venir se placer sous une charge posée sur deux poutres voisines, et une position haute pour laquelle ils soulèvent la charge au-dessus des poutres.

Ces véhicules de manutention sont équipés de moyens de convoyage à courroies, de direction perpendiculaire à celle des voies, et qui permettent de déplacer transversalement la charge d'une voie à la suivante, où elle est prise en charge par le véhicule de manutention associé à ladite voie suivante.

De plus, les poutres sont équipées de moyens de convoyage à courroies qui permettent de déplacer longitudinalement les charges qui sont posées sur elles sans l'aide du véhicule de manutention.

Une telle installation présente le grand inconvénient d'utiliser autant de véhicules de manutention qu'il y a d'intervalles entre poutres ou de voies. Or ce nombre est élevé étant donné que les poutres doivent être relativement rapprochées pour offrir une assise stable aux charges qu'elles supportent. Mais, comme on l'a déjà fait remarquer, les véhicules de manutention interviennent pour la majeure partie dans les frais d'investissement de l'aire de stockage.

On notera encore, que dans de tels véhicules de manutention, les moyens de convoyage transversaux qui permettent de transférer une charge d'une voie à la suivante, sont mécanisés sur toute la surface du véhicule. Ainsi, les courroies transporteuses sont motrices et s'étendent sur toute surface supérieure du véhicule. Mais ceci entraîne une dépense d'énergie supérieure à celle qui est nécessaire pour déplacer la charge.

De plus, pour les charges longues qui reposent sur plus de deux poutres, il faudrait mettre en place plusieurs chariots sous la charge afin de la supporter sans risque de déformation ou de basculement.

Enfin, on notera que selon ce brevet le véhicule est amené à sa position haute par un mécanisme qui prend appui sur le châssis du véhicule. Celui-ci doit donc avoir une structure relativement massive capable de supporter les efforts exercés par ledit mécanisme.

L'invention a pour but de remédier à ces inconvénients et concerne à cet effet une installation pour le stockage d'objets du type connu du document cité et définie dans le préambule de la revendication 1, et qui est caractérisée dans la seconde partie de cette revendication.

L'invention concerne également un procédé de stockage d'objets qui se caractérise en ce qu'il consiste :

à poser les objets à cheval sur au moins deux parmi une pluralité de poutres horizontales statiques, disposées parallèlement entre elles au-dessus du sol avec un espacement constant,

à utiliser au moins un véhicule de manutention de hauteur réglable, mobile dans une direction longitudinale perpendiculaire aux poutres et équipé sur sa partie supérieure de moyens d'entraînement dans une direction transversale, perpendiculaire à celle de déplacement du véhicule de manutention,

à régler le véhicule à une position basse pour qu'il puisse passer librement sous les poutres,

à déplacer le véhicule sous les poutres dans ladite direction longitudinale jusqu'à l'amener à l'aplomb de l'objet à transporter,

à l'immobiliser dans cette position, puis à régler la hauteur du véhicule pour que les moyens d'entraînement soulèvent l'objet au-dessus des poutres, et

à mettre en service un ou plusieurs desdits moyens d'entraînement selon la dimension de l'objet de manière à déplacer celui-ci dans ladite direction transversale, par exemple vers un bord de l'aire de stockage formée par les poutres.

L'installation et le procédé selon l'invention sont remarquables par le fait que jusqu'à présent, la seule solution qui a été envisagée par les spécialistes pour déplacer une charge posée sur des poutres parallèles, au moyen d'un véhicule de manutention, était de placer le véhicule sous la charge, d'amener le véhicule en position haute et de déplacer l'ensemble véhicule et charge parallèlement aux poutres. C'est la solution qui a été retenue en particulier dans le brevet US-2 711 812. Les inconvénients de cette solution ont déjà été exposés précédemment. L'invention, au contraire, va à l'encontre de cette idée en préconisant, de façon surprenante, de déplacer le véhicule de manutention perpendiculairement aux poutres.

Un avantage de l'installation selon l'invention est que l'on peut donner au véhicule de manutention une largeur légèrement inférieure à celle de la voie de passage définie entre deux rangées de supports. On comprend alors que l'installation selon l'invention utilise un nombre de véhicules de manutention extrêmement réduit.

Un autre intérêt du procédé selon l'invention réside dans le fait qu'il ne nécessite de mécaniser que la zone de stockage intéressée à un moment donné, contrairement aux procédés classiques dans lesquels toutes les zones de stockage sont mécanisées. Les coûts de l'investissement qui en résultent sont ainsi réduits dans une forte proportion, par rapport à ceux du procédé de stockage traditionnel. La réduction de coût est d'autant plus importante que la surface de stockage est grande ; elle peut atteindre 50 % dans la plupart des installations pour cartonneries.

D'autre part, le coefficient de remplissage de l'aire de stockage peut être fortement amélioré en adoptant un pas entre poutres qui soit inférieur à la dimension de l'objet à stocker le plus petit.

Grâce à ce dispositif, la place perdue entre objets sera au plus égale à l'intervalle libre entre poutres, et non plus à la différence entre la largeur réelle de l'objet et la largur de l'allée de stockage sur laquelle l'objet est positionné.

Grâce aux trois degrés de liberté qu'il possède (dans le sens longitudinal, dans le sens transversal et en hauteur), le véhicule peut effectuer toutes opérations de chargement, transfert et de déchargement d'objets posés en des emplacements quelconques sur l'aire de stockage.

Pour des aires de stockage de faible profondeur, on pourra utiliser des poutres en un seul tenant, posées par leurs extrémités sur des supports, tels que des piliers, définissant les limites latérales de la voie de passage du véhicule. Avantageusement, le véhicule a une largeur voisine de celle de ladite voie afin que, sans qu'il ait à se déplacer transversalement, il puisse prendre en charge un objet posé en un point quelconque le long des poutres.

Par contre, si l'aire de stockage est trop profonde, l'utilisation de poutres de longueur égale à la largeur de l'aire et qui reposent par leurs extrémités sur des supports, est interdite en raison de la trop grande déformation dans leur partie centrale.

Selon l'invention, on pourra utiliser dans ce cas de longues poutres s'appuyant par plusieurs points de leur longueur régulièrement espacés, sur des piliers.

Dans un autre mode de réalisation, on utilisera de courtes poutres juxtaposées bout à bout pour obtenir la largeur de l'aire de stockage, les extrémités adjacentes des poutres prenant appui sur un même pilier.

Ce second mode de réalisation est préférable, car les poutres sont moins lourdes et peuvent de ce fait être facilement soulevées pour dégager les moyens d'entraînement dans le cas où ces derniers se coinceraient par suite d'un mauvais positionnement du véhicule sous l'objet.

Dans ces deux modes de réalisation, on définit entre les piliers plusieurs voies de passage longitudinales de direction perpendiculaire aux poutres. Il est évident qu'un véhicule de manutention ne peut desservir à lui seul toutes les voies de passage étant donné qu'il serait gêné par les piliers pour passer d'une voie à une autre. C'est pourquoi, on utilise dans ce cas autant de véhicules de manutention qu'il y a de voies de passage, chaque véhicule ayant un mouvement propre longitudinal le long de sa voie. Pour transporter un objet, il est nécessaire d'amener tous les véhicules à occuper des positions côte à côte selon une ligne transversale passant par l'objet à transporter. L'objet est alors transféré transversalement d'un véhicule à l'autre par les moyens d'entraînement de ces derniers.

Dans un mode de réalisation particulier, le véhicule de manutention comprend :

un châssis de translation motorisé, monté sur roues, et ayant une forme générale rectangulaire dont la dimension transversale par rapport à la direction de déplacement du véhicule est sensiblement inférieure à la largeur de la voie de passage du véhicule entre les piliers supportant les poutres,

un berceau élévateur rectangulaire reposant sur ledit châssis et équipé à ses quatre coins de crics susceptibles de prendre appui sur le sol pour soulever le berceau au-dessus du châssis, lorsque le véhicule est à l'arrêt, et

une pluralité de sections porteuses allongées, fixées sur le berceau et comprenant des moyens d'entraînement, tels que des rouleaux et/ou des bandes transporteuses, lesdites sections ayant une longueur sensiblement égale à ladite dimension transversale du véhicule, une largeur légèrement inférieure à l'intervalle compris entre deux poutres successives, et une hauteur au-dessus du berceau telle, que lorsque ce dernier est en position haute, les rouleaux et/ou bandes transporteuses font saillie au-dessus de la face supérieure des poutres.

Le rôle du châssis est de :

supporter le berceau élévateur et les sections porteuses qui lui sont assujetties lorsque cet ensemble est en position basse ;

déplacer cet ensemble perpendiculairement aux poutres et l'amener sous les charges à manutentionner ;

supporter l'armoire recevant l'ensemble des appareils électriques et électroniques de commande (contacteurs, capteurs, automates programmables, etc.) ;

supporter les dispositifs électriques et électroniques permettant d'assurer la liaison entre les points fixes de l'installation et le véhicule de manutention.

Le berceau élévateur sert à :

supporter et assurer la liaison des sections porteuses ;

permettre l'élévation de celles-ci à un niveau supérieur à celui formé par le plan support des poutres ;

assurer avec le châssis une liaison qui permette le déplacement vertical relatif entre berceau et châssis élévateur.

Pour assurer son support et son transfert, le châssis comprend deux trains de roues destinés à rouler sur des pistes de roulement posées sur le sol, l'un des deux trains étant actionné par un moto-réducteur.

Avantageusement, ces roues seront bandagées avec un matériau assurant un bon coefficient d'adhérence avec la piste de roulement, ceci afin de permettre de fortes accélérations lors de la mise en mouvement et d'assurer un positionnement précis lors de l'arrêt du dispostif.

Le mouvement des crics est commandé par des moteurs par l'intermédiaire d'arbres de transmission et d'engrenages à pignons coniques. On évite d'utiliser des vérins hydrauliques ou pneumatiques parce que le véhicule de manutention devrait traîner avec lui des canalisations d'alimentation en fluide ou devrait porter un groupe hydraulique ou pneumatique pour la mise sous pression du fluide.

La liaison à mouvement vertical du berceau par rapport au châssis peut être assurée par la combinaison de quatre profilés en U fixés verticalement aux coins du châssis et de quatre galets d'axe horizontal fixés aux coins du berceau élévateur et qui sont montés roulants à l'intérieur des profilés, ou bien par des douilles à billes à déplacement rectiligne, fixées au berceau et guidées par des chandelles solidaires du châssis.

L'installation de stockage peut, selon l'invention, comporter deux ou plusieurs niveaux superposés de poutres définissant deux ou plusieurs étages comportant chacun plusieurs voies de passage dans lesquelles se déplacent des véhicules de manutention.

Le guidage du véhicule de manutention dans son déplacement longitudinal pourrait être effectué de façon classique au moyen de rails de guidage posés au sol, mais la pose de tels rails implique de longs et coûteux travaux d'aménagement du sol.

C'est pourquoi l'invention propose un système de guidage beaucoup plus économique, qui comprend deux guides longitudinaux fixés sur les piliers de part et d'autre de la voie de passage du véhicule, et au moins quatre galets fixés sur les deux faces latérales du châssis et destinés à rouler entre lesdits guides.

Dans un autre mode de réalisation, le guidage du véhicule est assuré par la combinaison d'un unique guide longitudinal, de section en U renversé, fixé sur les piliers d'un seul côté de la voie de passage du véhicule et de deux galets fixés du même côté du châssis et destinés à rouler à l'intérieur du guide.

Un mode de réalisation préféré de l'invention sera à présent décrit, à titre d'exemple non limitatif, en regard des dessins annexés dans lesquels :

La figure 1 est une vue en perspective partielle de l'aire de stockage et d'un véhicule de manutention selon l'invention ;

La figure 2 est une vue en perspective d'un détail de la figure 1, les sections porteuses étant supposées enlevées pour laisser apparaître certains détails du châssis et du berceau élévateur ;

La figure 3 est une vue en perspective d'un autre détail de la figure 1 ;

La figure 4 est une vue en plan d'une aire de stockage à trois voies ;

La figure 5 est une vue en plan du châssis de translation du véhicule de manutention ;

La figure 6 est une vue en coupe suivant la ligne VI-VI de la figure 5 ;

La figure 7 est une vue en plan du berceau élévateur du véhicule de manutention ;

La figure 8 est une vue en coupe suivant la ligne VIII-VIII de la figure 7 ;

La figure 9 est une vue en plan des sections porteuses ;

La figure 10 est une vue en coupe selon la ligne X-X de la figure 9 ;

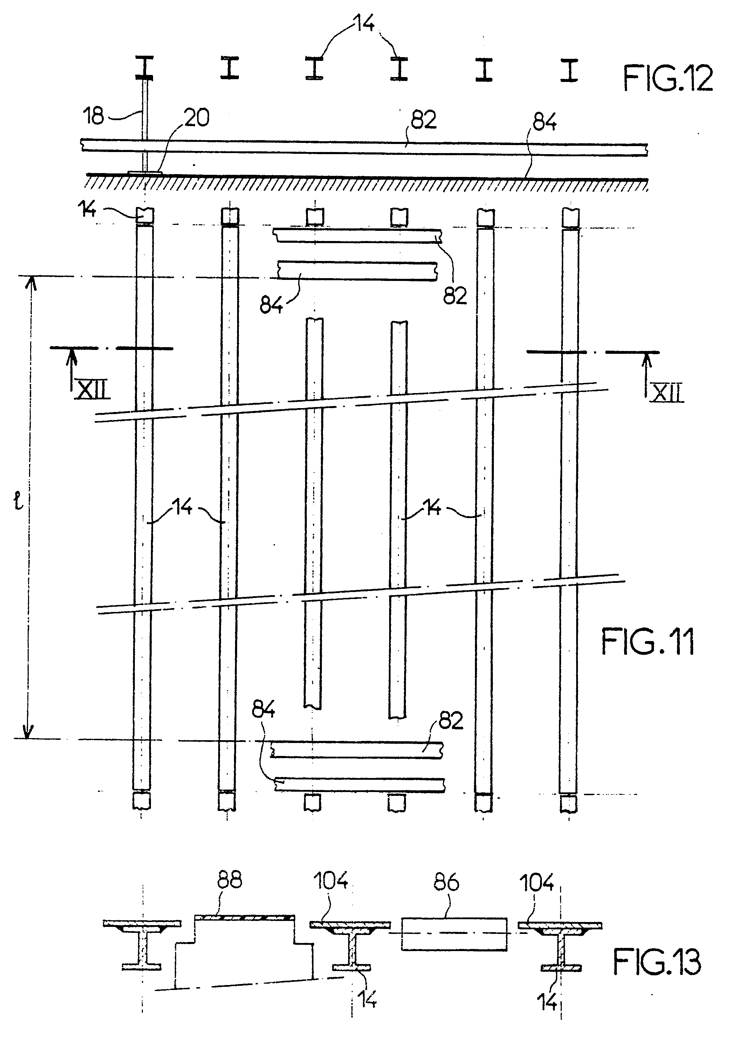

La figure 11 est une vue en plan partielle de l'aire de stockage ;

La figure 12 est une vue en coupe suivant la ligne XII-XII de la figure 11, et

La figure 13 est une vue en coupe partielle de l'installation de stockage selon une variante de réalisation.

On décrira l'invention dans le cas particulier du stockage de piles de plaques de carton ondulé servant à la fabrication d'emballages, étant entendu que la description reste valable dans le cas du stockage de tous autres objets.

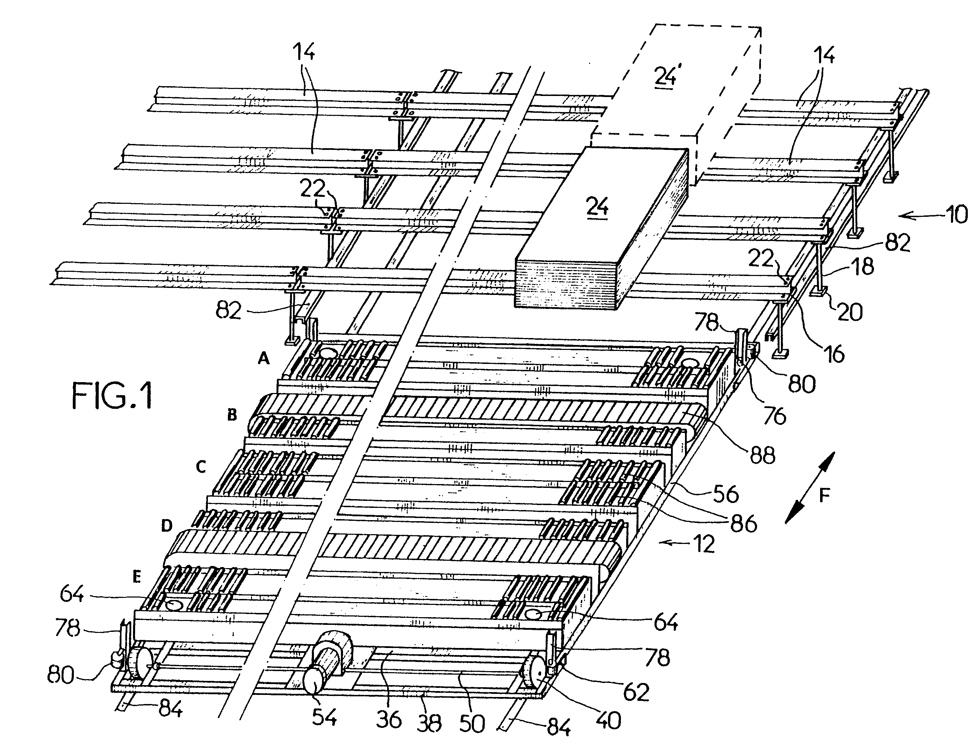

Avec référence à la figure 1, l'installation de stockage selon l'invention comprend une aire de stockage 10 et plusieurs véhicules de manutention 12 dont un seul est représenté.

L'aire de stockage est généralement située à la sortie de la machine onduleuse. Elle est constituée d'une pluralité de poutres métalliques 14, de préférence en I, disposées parallèlement sur un même plan horizontal et avec un espacement constant. Les poutres reposent par leurs extrémités sur de larges embases 16 formées à l'extrémité supérieure de piliers 18 alignés qui reposent sur le sol par des socles 20.

Les piles de carton 24 sont posées sur au moins deux poutres voisines. Pour éviter que la pile ne fléchisse dans sa partie centrale non supportée, il est nécessaire que l'espacement entre les poutres soit inférieur à une distance critique, qui dépend de la qualité du carton et de son poids spécifique. Pour le carton de plus faible qualité en petite cannelure, et avec les cannelures orientées parallèlement aux poutres, cette distance est de l'ordre de 40 cm.

De même, la longueur maximum des poutres entre appuis sera fonction des charges rapportées à chaque poutre et de leur moment d'inertie, ceci afin d'éviter une déformation excessive. Dans la pratique, on utilisera des poutres de 4 à 5 mètres de longueur.

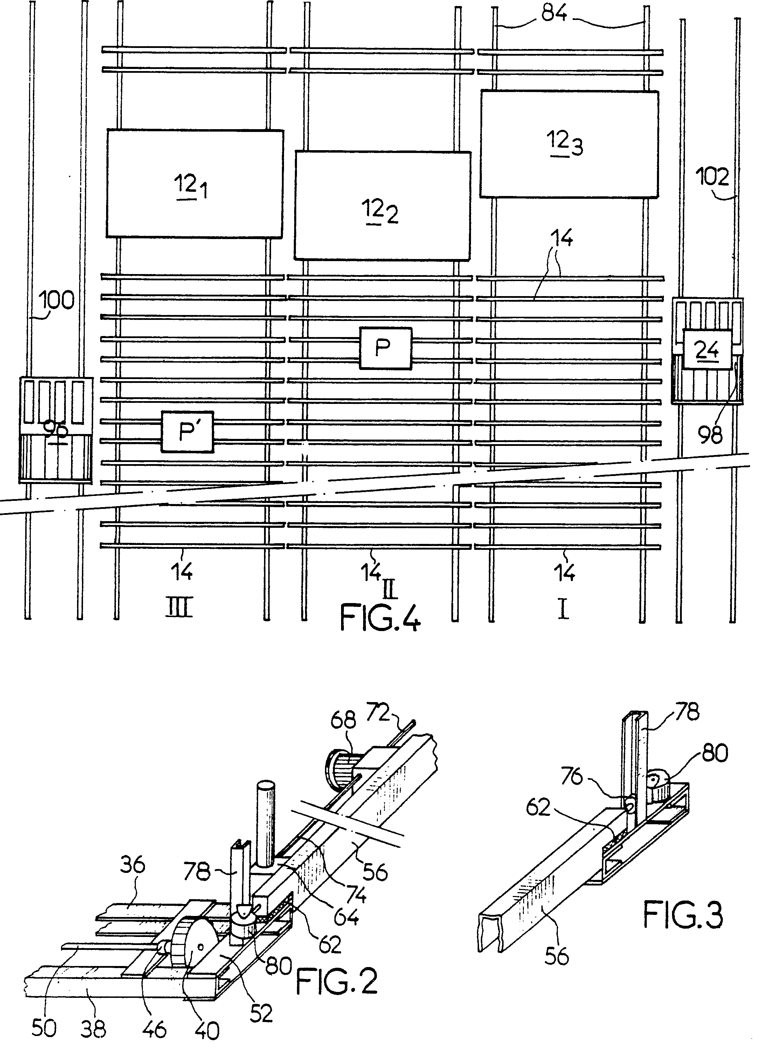

Pour former une aire de stockage plus profonde, on peut soit utiliser de longues poutres reposant sur des piliers intermédiaires, définissant des portées de longueur inférieure à la longueur critique, soit, de préférence, disposer bout à bout autant de poutres de longueur unitaire qu'il le faut pour obtenir la profondeur voulue. Les figures 1 et 4 illustrent cette dernière possibilité, dans le cas où l'on juxtapose trois poutres sur chaque ligne. Les extrémités voisines de deux poutres contiguës reposent sur un même pilier.

Pour leur fixation, les poutres sont pourvues à leurs extrémités, sur les quatre ailes du I, de trous 22 destinés à recevoir des tétons faisant saillie sur les embases 16.

La hauteur des piliers est choisie sensiblement égale à celle des machines de fabrication et de traitement du carton, de manière à ne pas avoir à changer les piles de carton de niveau.

Le véhicule de manutention 12 est susceptible de se déplacer de façon autonome perpendiculairement au sens des poutres 14, dans l'une des voies de passage formées sous les poutres entre les alignements de piliers 18. Dans le cas des figures 1 et 4 où il y a trois voies de passage, on utilisera trois véhicules de manutention $12_1$, $12_2$ et $12_3$ desservant chacun une voie de passage, comme on l'expliquera par la suite.

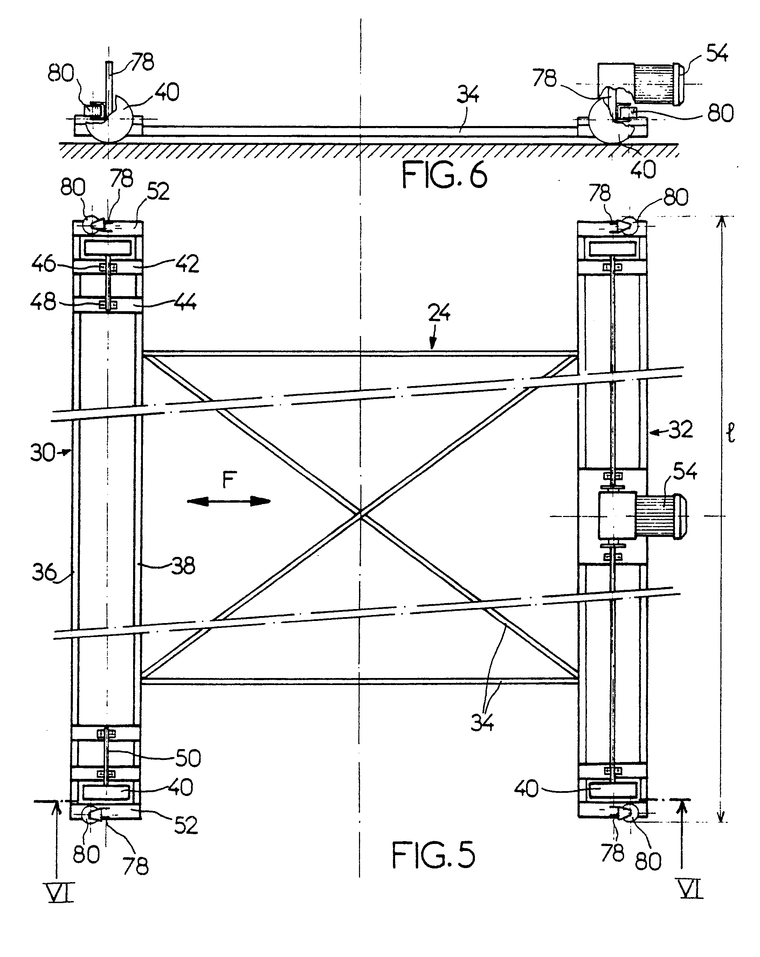

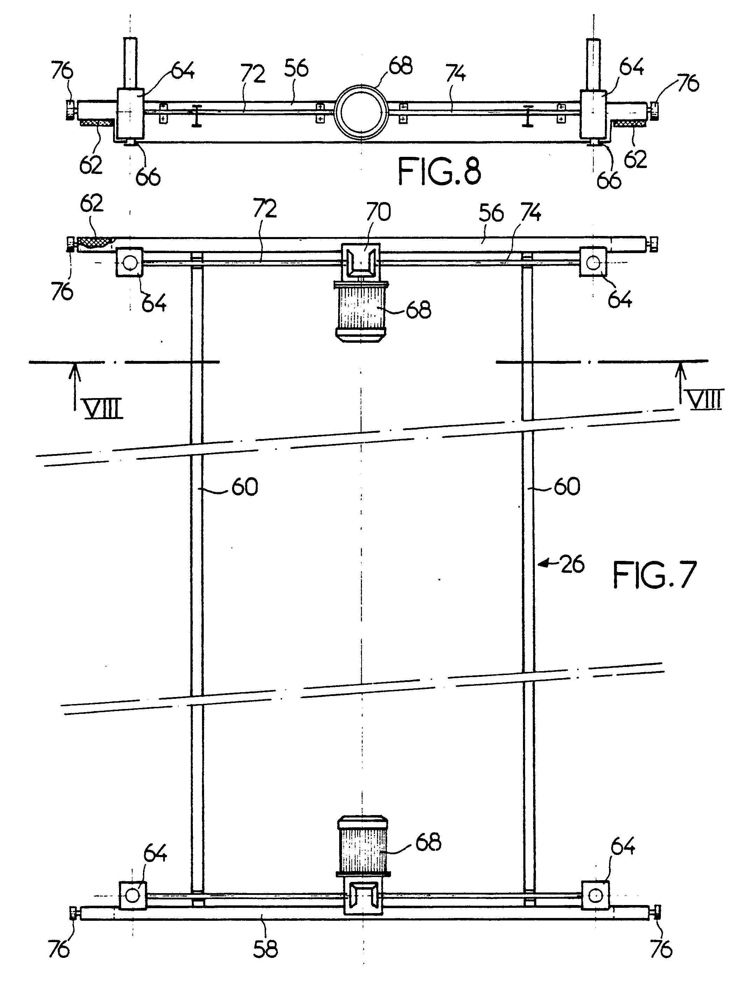

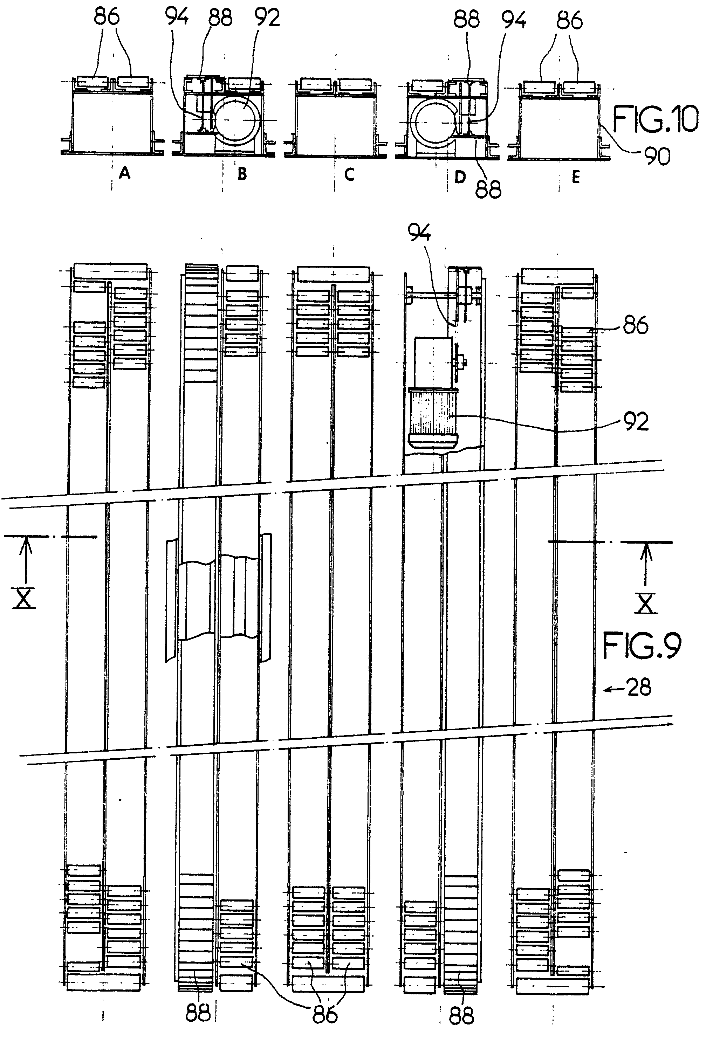

Chaque véhicule de manutention 12 comprend un châssis de translation 24 (figures 5 et 6), un berceau élévateur 26 (figures 7 et 8) reposant sur le châssis et des sections porteuses 28 (figures 9 et 10) constituées par des tables à rouleaux et/ou des chaînes transporteuses fixées sur le berceau.

Le châssis de translation 24 comporte deux trains de roulement 30 et 32 reliés par des entretoises 34. Chacun de ces trains est constitué d'un cadre protecteur de structure légère comprenant par exemple deux profilés allongés 36, 38, disposés à l'avant et à l'arrière des roues 40 et qui sont reliés par des traverses internes 42, 44 qui portent les paliers 46, 48 des axes 50 des roues et par des traverses externes 52 destinées à servir d'appui au berceau, comme on l'expliquera par la suite. Sur les profilés 36, 38 de l'un des trains de roues est fixé un groupe moto-réducteur 54 pour l'entraînement des roues dudit train.

Le berceau élévateur 26 (figures 7 et 8) est constitué par deux poutres longitudinales et parallèles 56, 58 de fort moment d'inertie qui assurent la rigidité longitudinale de l'ensemble. Elles sont reliées entre elles par deux entretoises plus légères 60, la rigidité transversale étant obtenue lorsque les sections porteuses 28 sont fixées sur les poutres 58.

Les profilés 56, 58 sont munis à leurs extrémités de plots 62 en matière élastique, par exemple en caoutchouc, par lesquels le berceau repose sur les traverses externes 52 du châssis.

Le berceau élévateur peut être soulevé au-dessus du châssis au moyen de quatre vérins 64, de préférence du type cric, comprenant chacun un carter fixé sur les profilés 56, 58 et une vis 66, qui, lorsqu'elle est en extension, vient prendre appui directement sur le sol. Les vérins sont avantageusement fixés au voisinage des extrémités des profilés 56, 58 de manière à ce que les points d'appui sur le sol soient éloignés au maximum les uns des autres pour assurer ainsi la meilleure stabilité pour le berceau. Chaque couple de crics associés à chacun des profilés 56, 58 est commandé à partir d'un groupe moto-réducteur 68 par l'intermédiaire d'un engrenage à pignons coniques 70 et d'arbres de transmission 72, 74 qui transmettent le mouvement de rotation de l'arbre du groupe aux tiges 66 des crics.

Le berceau est guidé dans son mouvement vertical par tout moyen de guidage approprié, dont une réalisation particulière sera décrite ci-après à titre d'exemple. Le guidage est assuré par la coopération de galets 76 (figures 1, 3, 7 et 8) d'axes horizontaux, fixés aux extrémités des profilés 56, 58 du berceau et pouvant rouler à l'intérieur de profilés 78 en U (figures 1, 3, 5 et 6) fixés verticalement sur les traverses externes 52 du châssis.

Le véhicule de manutention 12 est mobile longitudinalement dans le sens de la double flèche F (figure 1) qui est perpendiculaire aux poutres 14, et est guidé pour se déplacer dans l'une des voies définies sous ces derniers, entre deux rangées consécutives de piliers, par tous moyens de guidage appropriés. Les moyens de guidage qui sont montrés aux figures 1, 2, 3, 5 et 6 à titre d'exemple, comprennent d'une part, au moins quatre galets 80 d'axe vertical, fixés par exemple sur les profilés 78 et faisant partiellement saillie par rapport aux parois latérales du véhicule, constituées par les profilés longitudinaux 56, 58 et d'autre part deux guides longitudinaux 82 de section en U renversé qui sont fixés par une de leurs ailes sur les piliers 18 de part et d'autre de la voie de passage du véhicule, les galets 80 roulant sur les ailes internes des guides. Un guidage correct est obtenu en donnant au véhicule une largeur 1 aussi voisine que possible de l'intervalle compris entre les ailes internes des deux guides 82.

Un autre moyen avantageux pour obtenir un guidage bilatéral serait de n'utiliser que deux galets situés du même côté du châssis et se déplaçant à l'intérieur d'un profil en U renversé.

On notera que les guides peuvent servir à loger les câbles et connexions d'alimentation électrique du véhicule.

Le véhicule se déplace sur deux bandes de roulement 84 posées sur le sol. Ces bandes de roulement servent également d'appuis aux vis 66 des vérins mécaniques 64, jouant ainsi un rôle de répartiteur de charge.

Le véhicule de manutention peut comporter plusieurs sections porteuses 28, par exemple cinq, A, B, C, D et E, dans le cas des figures 1, 9 et 10.

Chaque section porteuse comprend un caisson allongé 90 fixé sur les profilés 56, 58 du berceau (figures 7, 8), dans le sens transversal par rapport au sens de déplacement du véhicule. Sur la face supérieure du caisson, sont fixés des moyens d'entraînement, constitués par exemple par des allées de rouleaux 86 non mécanisés et/ou par des bandes transporteuses 86 mécanisées.

Les sections ont une largeur légèrement inférieure à l'intervalle compris entre les poutres 14 de manière à pouvoir passer entre ces dernières lorsque le berceau est amené dans sa position haute.

Chaque section peut comprendre une seule allée de rouleaux ou une seule bande transporteuse, mais l'expérience montre qu'il est préférable de disposer côte à côte dans un même caisson, soit deux allées de rouleaux 86, de largeur égale à la moitié de la largeur de la section, soit une allée de rouleaux 86 et une bande transporteuse 88. Un tel agencement permet en effet, dans le cas de deux piles de carton 24, 24' disposées côte à côte, comme sur la figure 1, de déplacer l'une des piles sans toucher à l'autre. Si au contraire les sections comportaient une seule allée de rouleaux ou une seule bande transporteue occupant toute la largeur de la section, elles risqueraient d'entraîner à la fois les deux piles.

Pour réduire la déformation des piles de carton sur les poutres, on peut, comme le montre la figure 13, augmenter la surface d'appui des piles en fixant à plat sur la surface supérieure de chaque poutre une plaque rigide 104 de largeur supérieure, par exemple double de celle de la poutre. La plaque déborde de part et d'autre de la poutre, de sorte que la portion non supportée des piles est nettement réduite. Dans ces conditions, la largeur des sections porteuses est également réduite. Celles-ci pourront alors ne comporter chacune qu'une seule allée de rouleaux 86 ou qu'une seule bande transporteuse 88.

L'expérience montre que l'on arrive à entraîner des piles de carton disposées sur les poutres selon un agencement quelconque si les sections porteuses A, C et E comportent chacune deux allées de rouleaux 86 et si les sections B et D comportent chacune, intérieurement une allée de rouleaux 86 et extérieurement une bande transporteuse 88.

Chaque bande transporteuse est entraînée par un groupe moto-réducteur 92 logé à l'intérieur du caisson 90 par l'intermédiaire d'un ensemble de transmission à chaîne et pignon 94.

Bien entendu, la hauteur totale du véhicule de manutention, lorsqu'il est dans sa position basse, doit être inférieure à la hauteur libre comprise sous les poutres, de manière à ce que le véhicule puisse circuler librement sous les poutres.

Deux chariots 96, 98 sont prévus pour amener les piles de carton 24 de la desserte de l'onduleuse jusqu'à l'aire de stockage. Ces chariots roulent de part et d'autre de l'air de stockage 10 sur des chemins longitudinaux 102 et 104 perpendiculaires aux poutres 14 (figure 4). La partie supérieure de ces chariots est équipée d'allées de rouleaux motorisés ou de bandes transporteuses de façon à permettre le déplacement des charges perpendiculairement au sens de déplacement du chariot.

Avantageusement, les déplacements en longueur et en hauteur des véhicules et des chariots, et le fonctionnement des bandes transporteuses et des chariots sont commandés et synchronisés automatiquement, par exemple par ordinateur.

Pour montrer la souplesse de l'installation de stockage selon l'invention, on décrira à présent quelques exemples de fonctionnement en regard des figures 1 à 4.

Pour déposer la pile 24, par exemple à l'emplacement P de l'aire de stockage, on déplace le chariot 98 qui porte la pile juqu'à ce que celle-ci se trouve centrée sur les deux poutres 14 voisines sur lesquelles elle doit être posée. En même temps, un premier signal commande le déplacement des véhicules de manutention $12_3$ et $12_2$ initialement en position basse, jusqu'à les amener dans l'alignement du chariot 98. Les véhicules sont alors exactement positionnés pour que leurs sections soient en regard des intervalles compris entre les poutres successives.

L'ordinateur aura programmé la position d'arrêt des véhicules $12_3$ et $12_2$ pour que l'une des deux bandes transporteuses 88 soit sensiblement centrée sur la pile 24, ou, si la pile est de plus grande largeur, pour que les deux bandes transporteuses 88 puissent être en contact avec la pile.

Un second signal de commande est alors envoyé aux motoréducteurs 68 (figures 2, 7 et 8), ce qui amène les vérins 64 en état d'extension. Les vis 66 de ces derniers viennent prendre appui sur les bandes de roulement 84, soulevant alors le berceau et les sections porteuses. Ces dernières passent à travers les espaces compris entre les poutres, et font saillie au-dessus du plan de pose de ces derniers. Le chariot 98 et les sections porteuses des véhicules de manutention $12_3$ et $12_2$ forment alors une surface de transport pratiquement ininterrompue.

Un troisième signal de commande met ensuite en service les moteurs 92 d'entraînement des bandes transporteuses 88 intéressées ainsi que le moteur de déplacement latéral de la charge du chariot 98. La pile 24 est alors transférée depuis le chariot 98 jusqu'à l'emplacement P choisi. A ce moment, un quatrième signal arrête le fonctionnement des moteurs 92 et commande l'abaissement des véhicules. La pile 24 se trouve alors déposée exactement à l'emplacement P.

On notera que dans chacun des chariots $12_3$ et $12_2$, on ne met en service qu'une seule bande transporteuse 88 : celle qui se trouve en regard de la charge 24 posée sur le chariot 98, sauf dans le cas où la largeur de la charge est telle que cette dernière est en contact avec les deux bandes.

D'autre part, il n'est pas nécessaire que le milieu de la pile repose exactement sur une bande 88 pour être entraînée. On obtient encore un bon entraînement si la bande 88 est en contact avec la pile dans une zone allant du premier quart au troisième quart de la largeur de celle-ci, le reste de la pile reposant sur les rouleaux 86.

Si l'on désire à présent déplacer la pile de l'emplacement P à un autre emplacement P', on amène tout d'abord le véhicule $12_2$ sous l'emplacement P et le véhicule $12_1$ sous l'emplacement P', puis on commande le soulèvement desdits véhicules. Les bandes transporteuses 88 de ces derniers qui sont dans le prolongement l'une de l'autre sont alors mises en service, de sorte que la pile est transférée.

On notera que l'utilisation de plusieurs chariots 12 dans la figure 4 permet de rendre indépendantes les opérations d'entrée et de sortie sur l'aire de stockage. En effet : il est possible d'introduire des charges sur l'aire de stockage en alignant le véhicule $12_3$ et le chariot 98, et dans un même temps, de retirer des charges de l'aire de stockage en alignant le véhicule $12_1$ et le chariot 96.

Les transferts de charge de la zone I vers la zone II et de la zone II vers la zone III peuvent se faire pendant le temps où le chariot 98 se charge en dehors de la zone de stockage ou pendant le temps où le chariot 96 amène la charge au poste d'utilisation.

## Revendications

1. Installation pour le stockage d'objets (24), du type comprenant une aire de stockage (10) disposée sur au moins un niveau et qui est formée à chaque niveau d'une pluralité de poutres (14) horizontales et parallèles, espacées d'un pas constant et reposant sur des supports (18) et au moins un véhicule de manutention (12) mécanisé destiné à déplacer les charges sur les poutres, ledit véhicule étant équipé de moyens d'entraînement (86, 88) dans une direction transversale, perpendiculaire à la direction de déplacement du véhicule, et pouvant être réglé en hauteur caractérisée en ce que les supports (18) définissent sous les poutres (14) au moins une voie de passage de direction perpendiculaire aux poutres, et le long de laquelle le véhicule de manutention peut se déplacer, et que dans la position basse, le véhicule peut passer librement sous les poutres et, que dans la position haute, ses moyens d'entraînement peuvent soulever l'objet à déplacer.

2. Installation selon la revendication 1, caractérisée en ce que les poutres (14) sont posées par leurs extrémités sur des supports, tels que des piliers (18) définissant les limites latérales de la voie de passage du véhicule.

3. Installation selon la revendication 1, caractérisée en ce que, dans le cas d'une aire de stockage relativement profonde, les poutres (14) sont d'un seul tenant et reposent par leurs extrémités et par plusieurs points intermédiaires de leur longueur, régulièrement espacés, sur des piliers (18).

4. Installation selon la revendication 1, caractérisée en ce que dans le cas d'une aire de stockage relativement profonde, on utilise des poutres courtes (14) juxtaposées bout à bout pour obtenir la largeur de l'aire de stockage, les extrémités adjacentes des poutres prenant appui sur un même pilier (18) (figures 1 et 4).

5. Installation selon l'une des revendications précédentes, caractérisée en ce que les poutres (14) sont constituées par des profilés en I qui reposent par leurs extrémités sur des embases (16) formées à l'extrémité supérieure des piliers (8), et pourvues de tétons destinés à pénétrer dans des trous (22) percés sur les ailes des poutres.

6. Installation selon l'une des revendications 1 à 5, caractérisée en ce que la surface d'appui des objets peut être augmentée en fixant à plat sur les poutres, des plaquettes rigides (104) de largeur supérieure à celle des poutres.

7. Installation selon la revendication 1, caractérisée en ce que le véhicule de manutention comprend :

un châssis de translation motorisé (24), monté sur roues (73), et ayant une forme générale rectangulaire dont la dimension transversale par rapport à la direction (F) de déplacement du véhicule est sensiblement inférieure à la largeur de la voie de passage du véhicule entre les piliers supportant les poutres,

un berceau élévateur (26) reposant sur ledit châssis et équipé à ses quatre coins de crics (64) dont les vis sont susceptibles de prendre appui sur le sol pour soulever le berceau au-dessus du châssis, et

une pluralité de sections porteuses allongées (90), fixées sur le berceau et comprenant des moyens d'entraînement, tels que des rouleaux (86) et/ou des bandes transporteuses (88), lesdites sections ayant une longueur sensiblement égale à ladite dimension transversale du véhicule, une largeur légèrement inférieure à l'intervalle compris entre deux poutres successives, et une hauteur au-dessus du berceau (26) telle, que lorsque ce dernier est en position basse, le véhicule peut passer librement sous les poutres et lorsqu'il est en position haute, les rouleaux et/ou bandes transporteuses font saillie au-dessus de la face supérieure des poutres.

8. Installation selon la revendication 7, caractérisée en ce que pour son support et son transfert, le châssis comprend deux trains de roues (30) et (32) réunis entre eux par un entretoisement (34), et qui sont montés roulants sur des bandes de roulement (84) posées sur le sol, l'un des deux trains étant actionné par un moto-réducteur (54).

9. Installation selon la revendication 8, caractérisée en ce que les roues sont bandagées avec un matériau assurant un bon coefficient d'adhérence avec les bandes de roulement (84).

10. Installation selon l'une des revendications 8 et 9, caractérisée en ce que chacun des trains de roues (30, 32) comprend un cadre protecteur constitué de deux profilés allongés (36, 38) disposés à l'avant et à l'arrière des roues dans le sens transversal par rapport à la direction de déplacement du véhicule et reliés par des traverses internes (42, 44) servant de supports aux paliers (46, 48) des axes (50) des roues (40) et par des traverses externes (52) servant de support au berceau élévateur.

11. Installation selon l'une des revendications 7 à 10, caractérisée en ce que le berceau (26) est constitué par deux profilés longitudinaux (56, 58) assurant la rigidité et qui se terminent à leurs extrémités par des portées, éventuellement garnies d'une couche de matière élastique (62), par lesquelles le berceau repose sur les traverses (52) externes du châssis, à proximité des roues.

12. Installation selon l'une des revendications 7 et 11, caractérisée en ce que les crics (64) sont fixés au voisinage des extrémités des profilés (56, 58) du berceau et en ce que l'extension ou la rétraction de leur vis (66) est commandée par des moto-réducteurs (68), par l'intermédiaire d'arbres de transmission (72, 74) et d'engrenages à pignons coniques (70).

13. Installation selon l'une des revendications 7 à 12, caractérisée en ce que le berceau élévateur (26) est relié au châssis (24) par des moyens de liaison qui n'autorisent que des déplacements verticaux du berceau.

14. Installation selon la revendication 13, caractérisée en ce que lesdits moyens de liaison sont constitués par quatre profilés en U (78) fixés verticalement aux coins du berceau élévateur, par exemple sur les traverses externes (52) des trains de roues et par quatre galets (76) d'axe horizontal fixés aux coins du châssis et qui sont montés roulants à l'intérieur des profilés.

15. Installation selon la revendication 13, caractérisée en ce que lesdits moyens de liaison sont constitués par des douilles à billes à déplacement rectiligne selon leur axe, fixées au berceau et guidées par des chandelles verticales solidaires du châssis.

16. Installation selon l'une des revendications 7 à 15, caractérisée en ce que chaque véhicule de manutention (12) est guidé dans son déplacement longitudinal par deux guides longitudinaux (82) fixés sur les piliers (18) qui bordent la voie de passage du véhicule, et sur lesquels roulent au moins quatre galets (80) d'axe vertical, fixés par exemple au châssis.

17. Installation selon la revendication 16, caractérisée en ce que les guides sont constitués par des profilés en U renversé, fixés par l'une de leurs ailes sur les piliers, tandis que l'autre aile sert au roulement des galets, l'espace intérieur des guides pouvant éventuellement recevoir les câbles et connexions d'alimentation électrique du véhicule.

18. Installation selon l'une des revendications 7 à 15, caractérisée en ce que chaque véhicule est guidé par un unique guide longitudinal de section en U renversé fixé sur les piliers d'un seul côté de la voie de passage, deux galets fixés du même côté du véhicule étant montés roulants à l'intérieur du guide.

19. Installation selon l'une des revendications précédentes, caractérisée en ce qu'elle comprend deux ou plusieurs niveaux superposés de poutres définissant deux ou plusieurs étages comportant chacun plusieurs voies de passage dans lesquelles se déplacent des véhicules de manutention.

20. Procédé de stockage d'objets dans une installation selon l'une des revendications précédentes et qui utilise au moins un véhicule de manutention (12) de hauteur réglable, mobile dans une direction longitudinale perpendiculaire aux poutres et équipé sur sa partie supérieure de moyens d'entraînement (86, 88) dans une direction transversale, perpendiculaire à celle du déplacement du véhicule de manutention, caractérisé en ce qu'il consiste :

à poser les objets (24) à cheval sur au moins deux parmi une pluralité de poutres horizontales statiques (14), disposées parallèlement entre elles au-dessus du sol avec un espacement constant,

à régler le véhicule à une position basse pour qu'il puisse passer librement sous les poutres,

à déplacer le véhicule sous les poutres dans ladite direction longitudinale jusqu'à l'amener à l'aplomb de l'objet à transporter,

à l'immobiliser dans cette position, puis à régler la hauteur du véhicule pour que les moyens d'entraînement soulèvent l'objet au-dessus des poutres, et

à mettre en service un ou plusieurs desdits moyens d'entraînement (86, 88) selon la dimension de l'objet de manière à déplacer celui-ci dans ladite direction transversale par exemple vers un bord de l'aire de stockage formée par les poutres.

21. Procédé de stockage d'objets selon la revendication 20, utilisant au moins deux véhicules de manutention se déplaçant respectivement dans des voies de passage parallèles définies sous lesdites poutres, caractérisé en ce qu'il consiste à amener les véhicules dans l'alignement l'un de l'autre, puis à les amener en position haute de manière que leurs moyens d'entraînement forment une surface d'entraînement continue, sur laquelle un objet peut être transféré d'un véhicule à l'autre.

22. Application du procédé et de l'installation selon l'une des revendications précédentes au stockage de piles de carton dans une usine de fabrication d'emballages.

**Claims**

1. An arrangement for storing objects (24), of the type comprising a storage area (10) arranged on at least one level and which is formed at each level of a plurality of horizontal, parallel beams (14) regularly spaced and resting on supports (18) and at least one mechanized handling vehicle (12) intented to move the loads on the beams, the said vehicle being capable of height adjustment and equipped with means of drive (86, 88) in a transverse direction perpendicular to the direction of movement of the vehicle, characterized in that the supports (18) define, below the beams (14), at least one passageway perpendicular to the beams and along which the handling vehicle is able to move, and that in its lower position the vehicle can pass freely under the beams and in its higher position its drive means can raise the object to be moved.

2. An arrangement according to claim 1, characterized in that the ends of the beams (14) are positioned on supports such as pillars (18) defining the lateral limits of the passageway of the vehicle.

3. An arrangement according to claim 1, characterized in that, in the case of a relatively deep storage area the beams (14) are all in one piece and rest, at their ends and at several regularly spaced intermediate points along them, on pillars (18).

4. An arrangement according to claim 1, characterized in that in the case of a relatively deep storage area short beams (14) are used juxtaposed end to end to achieve the width of the storage area, the adjacent ends of the beams resting on the same pillar (18) (Figures 1 and 4).

5. An arrangement according to any one of the preceding claims, characterized in that the beams (14) consist of I-beams whose ends rest on seats (16) formed at the upper end of the pillars (8) and provided with teats designed to project into holes (22) pierced in the flanges of the beams.

6. An arrangement according to any one of claims 1 to 5, characterized in that the object support surface can be increased by fixing horizontally on the beams rigid plates (104) greater in width than the beams.

7. An arrangement according to claim 1, characterized in that the handling vehicle comprises :

a motorized displacement frame (24), mounted on wheels (73) and having a generally rectangular shape, the transverse dimension of which in relation to the direction (F) of displacement of the vehicle being appreciably smaller than the width of the passageway of the vehicle between the pillars supporting the beams,

a lifting cradle (26) resting on said frame and equipped in its four corners with jacks (64) whose screws are capable of resting on the ground in order to raise the cradle above the frame, and

a plurality of elongate carrier sections (90) fixed on the cradle and comprising drive means such as rollers (86) and/or conveyor belts (88), the said sections having a length approximately equal to the said transverse dimension of the vehicle, a width which is slightly less than the space between two successive beams and a height above the cradle (26) such that when this latter is in the lower position the vehicle can pass freely below the beams and when it is in the higher position the rollers and/or conveyor belts project over the upper faces of the beams.

8. An arrangement according to claim 7, characterized in that for its support and transfer the frame comprises two wheel trains (30) and (32) connected together by a bracing (34) and which are mounted rollingly on running strips (84) placed on the ground, one of the two trains being actuated by a gear-motor (54).

9. An arrangement according to claim 8, characterized in that the wheels are tyred with a material which ensures a good coefficient of adhesion with the running strips (84).

10. An arrangement according to claim 8 or claim 9, characterized in that each of the wheel trains (30, 32) comprises a protective frame consisting of two elongate sections (36, 38) arranged at the front and at the rear of the wheels in the direction transverse to the direction of displacement of the vehicle and connected by internal crosspieces (42, 44) acting as supports for the bearings (46, 48) of the axles (50) of the wheels (40) and by external crosspieces (52) acting as supports for the lifting cradle.

11. An arrangement according to any one of claims 7 to 10, characterized in that the cradle (26) consists of two longitudinal sections (56, 58) ensuring rigidity and ending in projections, optionally lined with a layer of elastic material (62), by means of which the cradle rests on the external crosspieces (52) of the frame near the wheels.

12. An arrangement according to either of claims 7 and 11, characterized in that the jacks (64) are fixed in the vicinity of the ends of the cradle sections (56, 58) and in that the extension or retraction of their screws (66) is controlled by gear-motors (68) through the intermediary of transmission shafts (72, 74) and conical pinion gears (70).

13. An arrangement according to any one of claims 7 to 12, characterized in that the lifting cradle (26) is connected to the frame (24) by connection means which only allow vertical cradle movements.

14. An arrangement according to claim 13, characterized in that the said connection means consist of four U-sections (78) fixed vertically to the corners of the lifting cradle, for example on the external cross-piece (52) of the wheel trains, and of four rollers (76) of horizontal axis fixed to the corners of the frame and mounted rollingly inside the sections.

15. An arrangement according to claim 13, characterized in that the said connecting means consist of bushings for ball bearings exhibiting rectilinear displacement along their axes, fixed to the cradle and guided by vertical shores firmly attached to the frame.

16. An arrangement according to any one of claims 7 to 15, characterized in that each handling vehicle (12) is guided in its longitudinal movement by two longitudinal guides (82) fixed to the pillars (18) which border the passageway of the vehicle and on which there run at least four rollers (80) with vertical axes, fixed for example to the frame.

17. An arrangement according to claim 16, characterized in that the guides consist of overturned U-sections fixed by one of their flanges to the pillars, while the other flange aids the rolling of the rollers, the space inside the guides optionally being capable of receiving the cables and connections for supplying the vehicle with electricity.

18. An arrangement according to any one of claims 7 to 15, characterized in that each vehicle is guided by a single, overturned U-section, longitudinal guides fixed to the pillars on one side only of the passageway, two rollers fixed on the same side of the vehicle being mounted rollingly inside the guide.

19. An arrangement according to any one of the preceding claims, characterized in that it comprises two or more superposed levels of beams defining two or more stages each comprising several passageways in which the handling vehicles move.

20. A process for storing objects in an arrangement according to any one of the preceding claims and which uses at least one handling vehicle (12) of adjustable height, mobile in a longitudinal direction perpendicular to the beams and equipped on its upper part with means for drive (86, 88) in a transverse direction perpendicular to that of the movement of the handling vehicle, characterized in that it consists :

in positioning the objects (24) astride at least two of a plurality of static horizontal beams (14) arranged parallel to each other above the ground and regularly spaced,

in adjusting the vehicle to a lower position so that it can pass freely under the beams,

in moving the vehicle under the beams in the said longitudinal direction to bring it to a position directly below the object to be transported,

in immobilizing it in this position, then in adjusting the height of the vehicle so that the drive means raise the object above the beams, and

in bringing into action one or more of the said drive means (86, 88) according to the size of the object so as to move this object in the said transverse direction, for example towards one of the edges of the storage area formed by the beams.

21. A process according to claim 20 for storing objects, using at least two handling vehicles moving respectively in parallel passageways defined under the said beams, characterized in that it consists in bringing the vehicles into alignment with each other, then in bringing them into the higher position so that their drive means form a continuous drive surface on which an object can be transferred from one vehicle to another.

22. The application of the process and of the arrangement according to any one of the preceding claims to the storage of piles of cardboard in a packaging fabrication factory.

**Patentansprüche**

1. Vorrichtung zur Handhabung und Lagerung von Stückgütern (24) mit einer sich auf wenigstens einer Ebene erstreckenden Lagerfläche (10), die in jeder Ebene von einer Mehrzahl von parallelen, horizontalen Trägern (14) gebildet wird, die in konstantem Abstand voneinander angeordnet sind und auf Auflagern (18) aufliegen, und mit wenigstens einem verfahrbaren mechanischen Handhabungswagen (12) für die Verschiebung der Lasten auf den Trägern, wobei dieser Wagen in einer transversalen Richtung normal auf die Verschieberichtung desselben Fördermittel (86, 88) aufweist und höhenverstellbar ausgebildet ist, dadurch gekennzeichnet, daß die Auflager (18) unter den Trägern (14) wenigstens eine Fahrbahn in auf die Träger normaler Richtung definieren, entlang welcher der Handhabungswagen verschoben werden kann, daß in der unteren Position der Wagen ungehindert unter den Trägern durchbewegt werden kann und daß in der oberen Position die Fördermittel das zu verschiebende Gut anheben können.

2. Vorrichtung nach Anspruch 1, dadurch gekennzeichnet, daß die Träger (14) mit ihren Enden auf den Auflagern, beispielsweise Stützen (18), abgestützt sind, die die seitlichen Begrenzungen der Fahrbahn des Wagens definieren.

3. Vorrichtung nach Anspruch 1, dadurch gekennzeichnet, daß für den Fall einer relativ großen Lagerfläche die Träger (14) aus einem Stück bestehen und an ihren Enden und an mehreren Zwischenpunkten in regelmäßigem Abstand voneinander auf den Stützen (18) abgestützt sind.

4. Vorrichtung nach Anspruch 1, dadurch gekennzeichnet, daß für den Fall einer relativ großen Lagerfläche kurze, mit ihren Enden aneinandergereihte Träger (14) zur Erzielung der Breite der Lagerfläche verwendet werden, wobei benachbarte Enden der Träger auf einer Stütze (18) aneinander anschließen (Fig. 1 und 4).

5. Vorrichtung nach einem der vorangehenden Ansprüche, dadurch gekennzeichnet, daß die Träger (14) von I-Profilen gebildet werden, die mit ihren Enden auf am oberen Ende der Stützen (18) ausgebildeten Auflageflächen (16) aufliegen, welche Erhebungen zum Eingreifen in in die Schenkel des Trägers gebohrte Löcher (22) aufweisen.

6. Vorrichtung nach einem der Ansprüche 1 bis 5, dadurch gekennzeichnet, daß die Auflagefläche der Güter durch Befestigen von starren Platten entlang den Trägern mit die Trägerbreite übersteigender Breite vergrößert werden kann.

7. Vorrichtung nach Anspruch 1, dadurch gekennzeichnet, daß der Handhabungswagen

ein motorisiertes, auf Rädern (40) laufendes Fahrgestell (24) von im wesentlichen rechteckiger Form, deren Abmessung normal auf die Verschieberichtung (F) des Wagens im wesentlichen geringer ist als die Breite der Fahrbahn des Wagens zwischen den die Träger tragenden Stützen,

eine auf dem Fahrwerk abgestützte Hebebühne (26), welche an den vier Ecken mit Schraubenwinden (64) ausgestattet ist, deren Schrauben am Boden in Anlage gebracht werden können, um die Bühne über das Fahrwerk anzuheben, und

eine Mehrzahl von länglichen Beförderungsabschnitten (90), die an der Bühne angeordnet sind und Fördermittel umfassen, wie beispielsweise Rollen (86) und/oder Förderbänder (88), wobei die Abschnitte eine Länge, die im wesentlichen der transversalen Abmessung des Wagens gleich ist, eine Breite, die geringfügig kleiner ist als der Abstand zwischen zwei aufeinanderfolgenden Trägern, und eine Höhe über der Bühne (26) aufweisen, daß für die Bühne in der unteren Position der Wagen ungehindert unter den Trägern hindurchfahren kann und für die Bühne in der oberen Position die Rollen und/oder Förderbänder über die obere Fläche der Träger hinausragen,
umfaßt.

8. Vorrichtung nach Anspruch 7, dadurch gekennzeichnet, daß das Fahrwerk zur Lagerung und Bewegung zwei miteinander durch Verstrebungen (34) verbundene Radsätze (30, 32) aufweist, welche auf am Boden angeordneten Laufflächen (84) abrollen, wobei einer der Radsätze durch einen Getriebemotor (54) antreibbar ist.

9. Vorrichtung nach Anspruch 8, dadurch gekennzeichnet, daß die Räder mit einem Material umwickelt sind, welches einen guten Adhäsionskoeffizient mit den Laufschienen (84) sicherstellt.

10. Vorrichtung nach Anspruch 9 oder 10, dadurch gekennzeichnet, daß jeder der Radsätze (30, 32) einen von zwei länglichen Profilen (36, 38) gebildeten Schutzrahmen aufweist, wobei die Profile vor und hinter den Rädern in Querrichtung bezogen auf die Verschieberichtung des Wagens angeordnet sind und durch Innenholme (42, 44), welche als Auflager für die Lager (46, 48) der Achsen (50) der Räder (40) dienen, und durch Außenholme (52), welche als Auflager für die Hebebühne dienen, miteinander verbunden sind.

11. Vorrichtung nach einem der Ansprüche 7 bis 10, dadurch gekennzeichnet, daß die Bühne (26) von zwei Längsprofilen (56, 58) gebildet wird, welche die Starrheit sicherstellen und an ihren Enden in Trägerfortsätzen (62) enden, welche gegebenenfalls mit einer Schicht aus elastischem Material bedeckt sind und auf welchen die Bühne auf den Außenholmen (52) des Fahrwerks in der Nähe der Räder gelagert ist.

12. Vorrichtung nach einem der Ansprüche 7 bis 11, dadurch gekennzeichnet, daß die Schraubenwinden (64) nahe den Enden der Profile (56, 58) der Bühne befestigt sind und daß das Ausfahren und Einfahren der Schrauben (66) von Getriebe-Motoren (68) unter Zwischenschaltung von Übertragungswellen (72, 74) und von konischen Zahnradgetrieben (70) gesteuert wird.

13. Vorrichtung nach einem der Ansprüche 7 bis 12, dadurch gekennzeichnet, daß die Hebebühne (26) mit dem Fahrwerk (24) über Verbindungsmittel verbunden ist, die nur eine vertikale Verschiebung der Bühne ermöglichen.

14. Vorrichtung nach Anspruch 13, dadurch gekennzeichnet, daß die Verbindungsmittel von vier vertikal an den Ecken der Hebebühne, beispielsweise an den Außenholmen (52) der Radsätze, befestigten U-Profilen (78) und von vier Führungsrollen (76), welche mit an den Ecken des Fahrwerks festgelegten, horizontalen Achsen ausgebildet sind und die im Inneren der Profile rollend festgelegt sind, ausgebildet werden.

15. Vorrichtung nach Anspruch 13, dadurch gekennzeichnet, daß die Verbindungsmittel von Kugellagerbuchsen für eine geradlinige Verschiebung längs ihrer Achse, die an der Bühne festgelegt und durch vertikale mit dem Fahrwerk verbundene Stützbalken geführt werden, gebildet sind.

16. Vorrichtung nach einem der Ansprüche 7 bis 15, dadurch gekennzeichnet, daß jeder Handhabungswagen (12) bei seiner Verschiebung in Längsrichtung von zwei in Längsrichtung an den die Fahrbahn des Wagens begrenzenden Stützen (18) angeordneten Führungen (82) geführt ist, auf welchen wenigstens vier Führungsrollen (80) mit vertikaler Achse ablaufen, welche beispielsweise am Fahrwerk angeordnet sind.

17. Vorrichtung nach Anspruch 16, dadurch gekennzeichnet, daß die Führungen von auf den Kopf gestellten U-Profilen gebildet werden, die mit einem der Schenkel an den Stützen befestigt sind, während der andere Schenkel zum Abrollen der Führungsrollen dient, wobei der Innenraum der Führungen gegebenenfalls die Kabel und Verbindungen der elektrischen Versorgung des Wagens aufnehmen kann.

18. Vorrichtung nach einem der Ansprüche 7 bis 15, dadurch gekennzeichnet, daß jeder Wagen durch eine einzige Führung in Längsrichtung, die einen Querschnitt eines auf den Kopf gestellten U aufweist und an den Stützen auf einer Seite der Fahrbahn befestigt ist, geführt ist, wobei zwei an dieser Seite des Wagens befestigte Führungsrollen zum Abrollen im Inneren der Führung angeordnet sind.

19. Vorrichtung nach einem der vorangehenden Ansprüche, dadurch gekennzeichnet, daß sie zwei oder mehrere übereinanderliegende Niveaus von Trägern umfaßt, die zwei oder mehrere Geschoße definieren, von welchen jedes mehrere Fahrbahnen umfaßt, auf welchen die Handhabungswagen verschiebbar sind.

20. Verfahren zum Lagern von Stückgütern in einer Vorrichtung nach einem der vorangehenden Ansprüche, wobei wenigstens ein Handhabungswagen (12) mit regelbarer Höhe verwendet wird, welcher in Längsrichtung quer zu Trägern bewegbar ist und an seiner Oberseite mit Fördermittel (86, 88) in einer auf die Verschiebungsrichtung des Wagens normalen Richtung ausgestattet ist, dadurch gekennzeichnet, daß es darin besteht, daß :

die Stückgüter (24) quer über wenigstens zwei einer Vielzahl von horizontalen statischen Trägern (14) gelegt werden, die zueinander parallel über dem Boden mit einem konstanten Abstand angeordnet sind,

der Wagen in eine untere Position eingestellt wird, um leicht unter den Trägern durchfahren zu können,

der Wagen unter den Trägern in Längsrichtung verschoben wird, bis er senkrecht unter das zu transportierende Gut gelangt,

der Wagen in dieser Position angehalten wird und darauf die Höhe des Wagens derart eingestellt wird, daß die Fördermittel das Gut über die Träger anheben und

ein oder mehrere der Fördermittel (86, 88) entsprechend den Abmessungen des Gutes in Betrieb genommen werden, um dieses in der Querrichtung beispielsweise zum Rand einer durch die Träger gebildeten Lagerfläche zu verschieben.

21. Verfahren zur Lagerung von Stückgütern nach Anspruch 20, wobei wenigstens zwei Handhabungswagen auf zueinander parallelen, durch die Träger definierten Fahrbahnen verschiebbar sind, dadurch gekennzeichnet, daß die Wagen in eine miteinander fluchtende Position gebracht werden, und daß sie darauf derart in eine obere Position gebracht werden, daß die Fördermittel eine kontinuierliche Förderfläche bilden, auf welcher ein Gut von einem Wagen zu einem anderen übergeführt werden kann.

22. Verwendung des Verfahrens und der Vorrichtung nach einem der vorangehenden Ansprüche zum Lagern von Kartonstößen in einem Werk zur Herstellung von Verpackungen.

FIG.1

0 107 585

0 107 585

FIG.4

FIG.3

FIG.2

2

FIG. 6

FIG.5

FIG.8

FIG.7

4

FIG.10

FIG.9

FIG.12

FIG.11

FIG.13